(19) Europäisches Patentamt
European Patent Office
Office européen des brevets

(11) **EP 1 215 619 B1**

(12) **EUROPÄISCHE PATENTSCHRIFT**

(45) Veröffentlichungstag und Bekanntmachung des Hinweises auf die Patenterteilung:
**23.03.2005 Patentblatt 2005/12**

(51) Int Cl.⁷: **G06K 9/20**, G06T 5/50, G08B 13/196, G08B 15/00, H04N 5/235

(21) Anmeldenummer: **01127922.1**

(22) Anmeldetag: **23.11.2001**

(54) **Verfahren zur Überwachung des Innenraums eines Kraftfahrzeuges**

Method of surveillance of the interior of a vehicle

Méthode de surveillance de l'habitacle d'un véhicule

(84) Benannte Vertragsstaaten:
**DE ES FR GB IT SE**

(30) Priorität: **16.12.2000 DE 10062977**

(43) Veröffentlichungstag der Anmeldung:
**19.06.2002 Patentblatt 2002/25**

(73) Patentinhaber: **Bayerische Motoren Werke Aktiengesellschaft**
**80809 München (DE)**

(72) Erfinder:
• **Koch, Carsten**
**80807 München (DE)**
• **Park, Su-Birm**
**52457 Aldenhoven (DE)**
• **Sauer, Sivart**
**80935 München (DE)**

(56) Entgegenhaltungen:
**EP-A- 0 680 205**          **DE-A- 4 228 629**
**DE-A- 19 921 488**        **US-A- 5 361 094**
**US-A- 6 021 210**

**Beschreibung**

Die Erfindung bezieht sich auf ein Verfahren zur Überwachung des Innenraums eines Kraftfahrzeuges mittels IR- Strahlung.

Beim Innenraum des Kraftfahrzeugs handelt es sich um einen bildverarbeitungstechnisch gesehen hochdynamischen Raum. Besonders störend sind auftretende Einflüsse von Fremdlichtquellen, z.B. der Sonne. Die Verwendung einer hochdynamischen Kamera (HDR Kameras) bietet den Nachteil, daß derartige Kameras sehr langsam und auch hochpreisig sind. Das Ausgangsbild einer HDR Kamera benutzt zur Darstellung seiner Daten üblicherweise eine Tiefe von 16-20 Bit (120 dB / 1048 k Graustufen) pro Bildpunkt (Pixel) um die volle optische Dynamik darzustellen. Diese Pixeltiefe ist für die weitere Verarbeitung der Bildinformationen notwendig, um alle relevanten Informationen aus der Eingangsszene zu gewinnen. Dies bedeutet ein gesteigertes Datenaufkommen pro Bild bezogen auf Bilder einer herkömmlichen monochromen Kamera, die die aufgenommene Szenerie in der Regel mit 8 Bit pro Pixel ab (256 Graustufen / 48dB) abbilden. Dieses gesteigerte Datenaufkommen resultiert wiederum in einer geringeren Auslesegeschwindigkeit und gesteigerten Folgekosten bei der Auswertehardware. Beide Faktoren erschweren die Verwendung einer HDR-Kamera im Automobilbereich nachhaltig.

Aus der WO-A-00/38949 ist ein Verfahren zur Überwachung des Innenraums eines Kraftfahrzeugs mittels IR-Strahlung bekannt. Vorgeschlagen wird die Aufnahme eines ersten Bildes des Innenraums ohne IR-Beleuchtung und die Aufnahme eines zweiten Bildes des Innenraums mit IR-Beleuchtung. Nachfolgend wird das erste Bild vom zweiten Bild subtrahiert. Hierdurch wird Sonnenlicht und das Licht von künstlichen Lichtquellen heraussubtrahiert.

Aus der EP 0 680 205 A2 ist ein Bildverarbeitungssystem zur Segmentierung bzw. Separierung eines Objekts von dem Hintergrund des Objekts bekannt. Das Objekt wird von einer Lichtquelle mit einer ersten Helligkeit beleuchtet und ein Bild hiervon aufgenommen. Das Objekt wird femer von einer Lichtquelle mit einer zweiten Helligkeit beleuchtet und ein Bild hiervon aufgenommen. Die Bilder werden pixelweise analysiert und Pixel, die in beiden Bildern besonders hell sind, werden dem Objekt und nicht dem Hintergrund zugeordnet.

Der Erfindung liegt die Aufgabe zugrunde, ein Verfahren der eingangs genannten Art zu schaffen, bei dem passende Beleuchtungsstärken für die Bildaufnahme ausgewählt werden.

Die Erfindung löst diese Aufgabe mit den im Patentanspruch 1 angegebenen Mitteln.

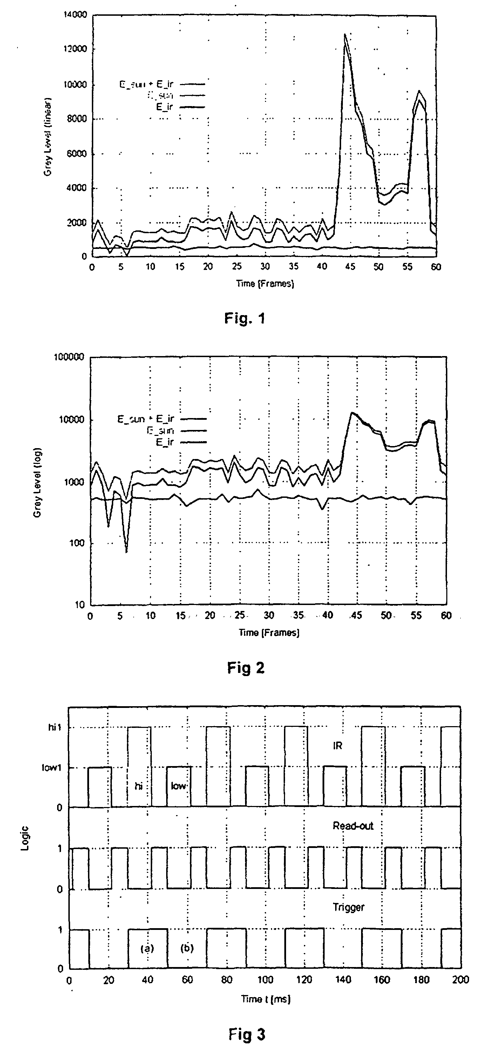

Bei der Erfindung wird nicht die Fähigkeiten der Kamera erweitert. Es wird vielmehr die Umgebung, die analysiert werden soll, beeinflusst. Dies geschieht durch neuartige Beleuchtungstechniken, welche im Folgenden detailliert beschrieben werden. Eine Möglichkeit, diese Störeinfüsse zu eliminieren und einen derartigen Raum durch digitale Bildverarbeitung analysieren zu können, ist die Verwendung einer Kamera, die nur Wellenlängen detektiert, die von einer eigenen, steuerbaren Lichtquelle ausgehen (z.B. im nahen IR-Bereich). Hierbei wird die der Szenerie zugrunde liegende Beleuchtungsstärke $E$ über die Zeit konstant gehalten. Das bedeutet, daß selbst bei Schwankungen der externen Störeinflüsse ein Pixel des verwendeten Bildsensors seinen Grauwert nur ändert, wenn sich die zu analysierende Szenerie ändert. Solch eine Rausch- oder Offsetunterdrückung vereinfacht die nachfolgende Bildauswertung entscheidend und führt zu reduzierten Systemkosten bezüglich der Auswertehardware. Um eine solche Offsetunterdrückung durchzuführen wird ein Bild ohne Eigenbeleuchtung $E_{sun}$ und möglichst rasch danach ein Bild mit Eigenbeleuchtung ($E_{sun} + E_{ir}$) aufgenommen. Dies wird an Hand von Fig. 1 weiter erläutert.

Subtrahiert man diese beiden Bilder $E_{sun}$ und $E_{sun} + E_{ir}$, so ergibt die Differenz der einzelnen Pixel ein Bild, in dem nur die empfangene Lichtleistung der Eigenbeleuchtung dargestellt ist. Der variable Offset der Fremdlichtquelle (n) ist eliminiert. Dies bedeutet, daß sich die Helligkeit im Ausgabebild der Offsetunterdrückung über die Zeit nicht verändert, selbst dann nicht, wenn z.B. im Fahrzeuginnenraum die Innenraumbeleuchtung ein- oder ausgeschaltet wird. Die Ausgabesequenz der Offsetunterdrückung ist somit frei von Lichtschwankungen.

Der von der Kamera detektierte Grauwert ist eine Funktion der auftretenden Beleuchtungsstärke und des Reflexionsfaktors ρ der Oberfläche. Die unterschiedlichen Reflektanzen der Objekte in der Szene bilden somit das eigentliche Bild.

Gleichung 1

$$(E_{sun} + E_{ir}) - E_{sun} = E_{ir} = \text{const.}$$

$$gl = f(\rho \cdot E_{ir})$$

Dieser Zusammenhang ist in Fig. 1 dargestellt. Hierbei wurde das Signal eines einzelnen Pixels (Grey Level) über die Zeit aufgetragen (Zeitbereich). Als Zeiteinheit dient hier die Differenz zwischen dem Auslesen zweier Bilder des Bildsensors (Frames). Bei einer Bildrate von 25Hz entspricht dies einem Bild pro 40ms. Die Position des Pixel auf dem Bildsensor ist hierbei konstant. Die Sequenz zeigt kleinere Beleuchtungsschwankungen und einen größeren Doppelpeak, hervorgerufen durch eine leistungsstarke Frémdlichtquelle, die kurz in das Fahrzeuginnere gerichtet wurde.

Diese bekannte Verfahren ist besonders dann mit gutem Erfolg einsetzbar, wenn folgende Rahmenbedingungen erfüllt werden:

- Die verwendete Kamera kann den gesamten optischen Dynamikbereich der Szene erfassen und geht auch bei einzelnen Pixeln oder Bildbereichen nicht in die Sättigung (Übersteuerung/Untersteuerung).
- Die externe Bestrahlungsstärke $E_{sun}$ ändert sich zwischen den beiden Bildern nicht (andernfalls würde die Subtraktion der beiden Eingangsbilder ein unbrauchbares Ergebnis liefern)
- Die gesamte zu analysierende Szenerie unterliegt der Eigenbeleuchtung, wie dies in geschlossenen Räumen wie z.B. im Fahrzeug gegeben ist.
- Die Kennlinie des Bildsensors ist vorzugsweise linear. Dadurch verringert sich der Aufwand für die Differenzbildung der beiden Eingangsbilder. Die Subtraktion zweier Bilder einer Kamera mit logarithmischer Kennlinie ist gleichbedeutend mit einer Division der Grauwerte und somit ungeeignet. Es besteht jedoch die Möglichkeit das Ausgangssignal eines logarithmischen Bildsensors durch eine Look-Up Table zu linearisieren, um im Anschluss die Bilder zu subtrahieren.

Das vorstehend beschriebene Verfahren dient lediglich zur Offsetunterdrückung des Eingangsbildes. Hierzu werden zwei Teilbilder subtrahiert, um ein Ausgangsbild ohne Offset zu erhalten. Das Bild zum Zeitpunkt $t_n$ wird zusätzlich zum einfallenden Fremdlicht $E_{sun}$ mit einer Eigenlichtquelle $E_{ir}$ beleuchtet, das Bild zum Zeitpunkt $t_{n+1}$ nicht.

Die Verwendung einer zusätzlichen Eigenlichtquelle im Bild $t_n$ hat hierbei den zusätzlichen Effekt, daß die optische Dynamik im Bild bezogen auf das Bild ohne zusätzliche Beleuchtung zum Zeitpunkt $t_{n+1}$ reduziert wurde. Dies soll im folgenden verdeutlicht werden:

Angenommen sei eine Szene, die eine optische Dynamik *DR* im Zeitbereich und im Ortsbereich aufweist. Dies trifft für einen Fahrzeuginnenraum mit den wechselnden externen Beleuchtungseinflüssen und unterschiedlichen Materialien des Interieurs zu.

Die Lichtschwankungen an einem festen Ort, jedoch zwischen zwei Aufnahmen zum Zeitpunkt $t_n$ und $t_{n+1}$ werden durch die auftretende Beleuchtungsstärke *E* charakterisiert (Zeitbereich).

Da bei einer Positionierung des vorzugsweise als IR-Kamera ausgebildeten Bildsensors im Fahrzeuginnenhimmel keine Strahlung der Fremdlichtquelle (Sonne, Strassenbeleuchtung) direkt auf die Sensoroberfläche trifft, wird die optische Dynamik innerhalb eines Bildes (Ortsbereich) im wesentlichen durch die Reflektanz p des Interieurs beeinflußt. Dies verdeutlicht die folgende Gleichung:

## Gleichung 2

$$DR = 20 \log \left( \frac{\rho_{max} E_{max}}{\rho_{min} E_{min}} \right)$$
$$0 < \rho < 1$$

Bei einer Szene ohne zusätzliche Eigenbeleuchtung entsprechen die auftretenden Bestrahlungsstärken $E_{min}$ und $E_{max}$ externer Lichtquellen bei autonomen Fahrzeugen im wesentlichen der Sonneneinstrahlung $E_{sun}$.

Gleichung 3

$$E_{max} = E_{sun,max}$$

$$E_{min} = E_{sun,min}$$

Bei Verwendung einer zusätzlichen Eigenbeleuchtung $E_{ir}$, z.B. im nahen Infrarot, wirkt dies additiv zu $E_{sun}$.

Gleichung 4

$$E_{max} = E_{sun,max} + E_{ir}$$

$$E_{min} = E_{sun,min} + E_{ir}$$

Durch diesen Offset wird die optische Dynamik einer Szene reduziert, unabhängig vom Reflektionsgrad ρ der Oberflächen:

**Gleichung 5**

$$DR_{sun} > DR_{sun+ir}$$

$$20 \log \left( \frac{\rho_{max} E_{sun,max}}{\rho_{min} E_{sun,min}} \right) > 20 \log \left( \frac{\rho_{max} (E_{sun,max} + E_{ir})}{\rho_{min} (E_{sun,min} + E_{ir})} \right)$$

$$\frac{\rho_{max} E_{sun,max}}{\rho_{min} E_{sun,min}} > \frac{\rho_{max} (E_{sun,max} + E_{ir})}{\rho_{min} (E_{sun,min} + E_{ir})}$$

$$\frac{E_{sun,max}}{E_{sun,min}} > \frac{E_{sun,max} + E_{ir}}{E_{sun,min} + E_{ir}}$$

$$E_{sun,max} (E_{sun,min} + E_{ir}) > E_{sun,min} (E_{sun,max} + E_{ir})$$

$$E_{sun,max} E_{ir} > E_{sun,min} E_{ir}$$

$$E_{sun,max} > E_{sun,min}$$

$$qed.$$

Fig. 2 soll dies verdeutlchen. Hierbei handelt es sich um den selben Plot wie in Fig. 1, jedoch wurden die Grauwerte diesmal logarithmisch und nicht linear aufgetragen, um die Auswirkungen auf die Bildsensor-Dynamik zu betonen.

Hierzu ein reales Beispiel: Gegeben sei eine Szene mit einer Dynamik von $E_{sun,min} = 4 \cdot 10^{-4}$ W/m$^2$ und $E_{sun,max}$ = 50 W/m$^2$. Diese Bestrahlungsstärke wird nun von einer linearen HDR Kamera in Grauwerte von 1...125k umgewandelt. Dies entspricht einer Dynamik von 102 dB oder einem Kontrast von 1:125k. Durch einen zusätzlichen Offset von $E_{ir}$ = 50 mW/m$^2$, hervorgerufen durch eine gezielte Eigenbeleuchtung wird die Dynamik im Bild auf 60 dB gesenkt. Dies entspricht einem Kontrast von 1:1000 und somit der Leistung handelsüblicher CMOS Sensoren mit einer Auflösung von 10 Bit.

Gleichung 6

$$\frac{50 \, W/m^2}{4,4 \cdot 10^{-4} \, W/m^2} = 125k$$

$$\frac{50 \, W/m^2 + E_{ir}}{4,4 \cdot 10^{-4} \, W/m^2 + E_{ir}} = 1k$$

$$E_{ir} \approx 50 \, mW/m^2$$

Das Ausgangsbild der Offsetunterdrückung ist in der Regel in seiner Dynamik reduziert durch die Subtraktion um die Lichtleistung der Sonne. Um jedoch das Ausgangsbild der Offsetunterdrückung zu berechnen, ist es notwendig weiterhin ein Teilbild ohne Eigenbeleuchtung aufzunehmen, das bedingt durch die Einstrahlung der Sonne eine unverändert hohe Dynamik aufweist. An diesem Punkt setzt das erfindungsgemäße Verfahren an. Um trotz einer gegebenen hochdynamischen Umgebung einen nicht hoch dynamischen Sensor verwenden zu können, werden beide Eingangsbilder für das beschriebene Verfahren zur Offsetunterdrückung in ihrer Dynamik reduziert.

Ziel der Erfindung ist es, trotz einer hoch dynamischen Umgebung die optische Dynamik eines Raums (z.B. Kfz-Innenraum) zu reduzieren und gleichzeitig störendes Fremdlicht zu unterdrücken.

Hierbei werden zwei aufeinanderfolgende Bilder einer Bildsequenz zum Zeitpunkt $t_n$ und $t_{n+1}$ benutzt, um ein Ausgangsbild zu generieren. Beide Bilder werden mit zwei unterschiedlichen Lichtleistungen durch eine steuerbare Eigenbeleuchtung belichtet werden: $E_{ir,hi}$ zum Zeitpunkt $t_n$ und $E_{ir,low}$ zum Zeitpunkt $t_{n+1}$.

Hierdurch werden die Vorteile der Offsetunterdrückung und der Dynamik-Reduzierung verbunden. Dies ist an Hand von Fig. 3 verdeutlicht. Dabei wird eine Hochleistungs-Leuchtdiode verwendet, die von einer Logik angesteuert und je nach Bild mit einem unterschiedlichem Strom betrieben wird und so zwei verschiedene Lichtleistungen emittiert.

Es ist ausreichende, die Leuchtdioden während der Integrationszeit des Bildsensors anzusteuern, da die Pixel nur dann auch tatsächlich Licht detektieren. Während der Read-out Phase des Sensors kann die Eigenbeleuchtung ausgeschaltet werden, um Energie zu sparen und die Leuchtquelle abkühlen zu lassen.

Hierdurch sind größere Impulsströme und somit mehr Lichtleistung bei gleichzeitig kleineren Leuchtdioden möglich.

$E_{ir,low}$ wirkt wie eine Verstärkung für die minimale Lichtleistung $E_{min}$, die vorher nur durch die Fremdlichtquellen mit $E_{sun,min}$ definiert wurde. Das Ausgangsbild der Doppelbeleuchtung wird daher wie folgt gebildet:

Gleichung 7

$$|(E_{sun} + E_{ir,hi}) - (E_{sun} + E_{ir,low})| = |E_{ir,hi} - E_{ir,low}| = const.$$

Hierbei gelten die gleichen Rahmenbedingungen wie im Zusammenhang mit der Reduzierung der Dynamik aufgeführt.

Die Intensitäten von $E_{ir}$ lassen sich wie folgt berechnen: In beiden Bildern wird durch $E_{ir}$ die ursprüngliche Dynamik der Szene gesenkt. Das Verhältnis zwischen der Intensität $E_{ir,hi}$ und $E_{ir,low}$ ist in Gleichung 8 aufgezeigt. Hierbei bewirkt $E_{ir,hi}$ eine höhere Dynamikreduzierung als $E_{ir,low}$ und somit auch einen geringeren Kontrast.

### Gleichung 8

$$20 \log \left( \left| \frac{E_{sun,max} + E_{ir,hi}}{E_{sun,min} + E_{ir,hi}} - \frac{E_{sun,max} + E_{ir,low}}{E_{sun,min} + E_{ir,low}} \right| \right) = DR_{df}$$

Hierdurch wird die Dynamik $DR_{df}$ des Ausgangsbildes durch die Differenz der beiden Eigenbeleuchtungsquellen $E_{ir,hi}$ und $E_{ir,low}$ gebildet, da der Fremdlichtanteil durch die Offsetunterdrückung laut Gleichung 7 eliminiert wurde.

Angenommen sei wieder das Rechenbeispiel aus Gleichung 6. Das Ausgabebild der Doppelbeleuchtung soll einen maximalen Kontrast $DR_{df}$ von 1:255 aufweisen, dies entspricht einer Dynamik von 48 dB oder einer linearen Pixel-Tiefe von 8 Bit. Die maximale Kameradynamik handelsüblicher CMOS Kameras wurde bereits auf 60 dB spezifiziert und führte somit zu einer notwendigen Eigenbeleuchtung von 50 mW/m². Zweckmäßig wird diese notwendige, minimale Eigenbeleuchtung zur Dynamikreduzierung der Szene mit $E_{ir,low}$ definiert. Eine stärkere Eigenbeleuchtung $E_{ir,hi}$ führt lediglich zu einer stärkeren Dynamikreduzierung der Szene und ist somit auf jeden Fall im Erfassungsbereich der Kamera.

### Gleichung 9

$$20 \log \left( \left| \frac{50W/m^2 + E_{ir,hi}}{4,4 \cdot 10^{-4} + E_{ir,hi}} - \frac{50W/m^2 + E_{ir,low}}{4,4 \cdot 10^{-4} + E_{ir,low}} \right| \right) = 48 dB$$

$$E_{ir,low} = 50 mW/m^2$$

$$\Rightarrow E_{ir,hi} \approx 68 mW/m^2$$

Die in einer Szene auftretenden Bestrahlungsstärken $E_{sun,min}$ und $E_{sun,max}$ sind durch die Umgebungseinflüsse gegeben und somit nicht kontrollierbar.

Bei der Erfindung wird durch die Variation von $E_{ir,low}$ und $E_{ir,hi}$ die optische Dynamik einer Szene derart beeinflusst, dass auch Szenen mit einer eigentlich hohen Dynamik $DR_{sun}$ durch Kameras mit einer geringeren optischen Dynamik $DR_{df}$ analysiert werden können, ohne Bildinformationen zu verlieren, bei gleichzeitiger Offsetunterdrückung.

Im folgenden werden die aus der Doppelbeleuchtung resultierenden Vorteile gegenüber einer herkömmlichen, kontinuierlichen Beleuchtung im nahen IR-Bereich aufgezeigt.

**Schnelligkeit**

Die Schnelligkeit einer CMOS-Kamera wird im Falle einer automotiven Verwendung ohne Rahmenbedingungen wie z.B. Videonormen maßgebend durch die verwendete Integrationszeit des Ausgangsstromes der Fotodioden bestimmt. Eine Kamera, die 10ms zum Belichten benötigt, um ein stabiles Ausgangssignal an den Pixeln anliegen zu haben, kann nicht schneller Bilder liefern als eben diese 10 ms. Hinzu kommt noch ein Zeitdelay zum Auslesen der Pixel. Um so stärker der Lichteinfall auf dem Sensor ist, um so kürzer kann integriert werden, da der Abstand zum Dunkelstrom und Grundrauschen zunimmt. Durch die Anhebung der minimalen Lichtleistung im Fahrzeug von $E_{sun,min}$

auf $E_{sun,min} + E_{ir,low}$ ist es daher von vorne herein möglich die Kamera mit einer kleineren Belichtungszeit zu betreiben und somit die

Bildrate zu erhöhen. Gerade die OOP (Out-Of-Position) Anwendung stellt sehr kritische Zeitanforderungen, die im Moment von einer HDR-Kamera prinzipbedingt nicht erfüllt werden kann. Durch die Reduzierung der optischen Dynamik im Innenraum eines Fahrzeugs kann eine OOP-Erkennung mittels Bildverarbeitung kostengünstig selbst beim Einfluß von starken Fremdlichtquellen durchgeführt werden.

Die zuletzt beschriebene Bildvorverarbeitung könnte bereits im Bildsensor erfolgen, um die Berechnung des offsetfreien und niedrig dynamischen Ausgangsbildes zu beschleunigen. Dies hat eine Steigerung der Geschwindigkeit des Gesamtsystems zur Folge.

**Kosten**

Eine Eigenbeleuchtung im nahen IR-Bereich ist notwendig, um die Auswertung des Innenraums eines Kfz auch ohne Fremdbeleuchtung (Sonne etc.) sicherzustellen. Diese Beleuchtungsquelle wird nun nicht mit einem, sondern mit zwei verschiedenen Licht-Ausgangsleistungen betrieben. Hierbei entstehen lediglich geringfügig gesteigerte Kosten für die Trigger-Logik. Die Kosten für einen bereits jetzt handelsüblichen CMOS-Bildsensor sind günstiger als für einen speziell für den automotiven Bereich ausgelegten Spezialsensor mit hoher Dynamik.

**Patentansprüche**

1. Verfahren zur Überwachung des Innenraums eines Kraftfahrzeuges mittels IR-Strahlung, bei dem mindestens ein stationärer IR-Sender und mindestens ein stationärer IR-Empfänger in zentraler Position im Fahrzeuginnenraum angeordnet ist, der Innenraum zumindest temporär bestrahlt wird, die reflektierte IR-Strahlung mit einer IR-Kamera als IR-Empfänger empfangen wird, dass zur Unterdrückung von Störeinflüssen zwei Bilder aufgenommen werden, und die beiden Bilder hinsichtlich ihrer Grauwerte voneinander subtrahiert werden, ***dadurch gekennzeichnet, dass*** es zwei Bilder desselben Objekts sind, die durch eine Beleuchtung des mindestens einen IR-Sensors mit zwei verschiedenen Licht-Ausgangsleistungen des IR-Senders erzeugt werden und die Beleuchtungsstärken so gewählt werden, dass deren Unterschied unter Ausblendung des Umgebungslichtes den vollen Dynamikbereich der Kamera ausnutzt.

2. Verfahren nach Anspruch 1, ***dadurch gekennzeichnet, dass*** der IR-Sender eine Leuchtdiode ist, die während der Integrationszeit des IR-Sensors eingeschaltet und während der Read-Out Phase des IR-Sensors ausgeschaltet ist.

3. Verfahren nach einem der Ansprüche 1 oder 2, **dadurch gekennzeichnet, dass** das optische Sensorelement der Kamera eine lineare Kennlinie besitzt, oder dass Kameras mit einer nicht-linearen Kennlinie mittels einer Look-Up Table einen linearen Ausgang zur Verfügung stellen.

**Claims**

1. A method for monitoring the interior of a motor vehicle by means of infrared radiation, in which at least one stationary infrared transmitter and at least one stationary infrared receiver are arranged in a central position in the interior of the vehicle, the interior is at least temporarily irradiated, the reflected infrared radiation is received by an infrared camera as an infrared receiver, in that two images are recorded to suppress interfering influences, and the two images are subtracted from one another with respect to their grey scale values, **characterised in that** these are two images of the same object which are generated by illumination of the at least one infrared sensor with two different light output levels of the infrared transmitter and the illumination intensities are selected such that their difference uses the full dynamic range of the camera blanking out the ambient light.

2. A method according to claim 1, **characterised in that** the infrared transmitter is a light-emitting diode which is switched on during the integration time of the infrared sensor and is switched off during the read-out phase of the infrared sensor.

3. A method according to either of claims 1 or 2, **characterised in that** the optical sensor element of the camera has a linear characteristic curve or **in that** cameras with a non-linear characteristic curve provide a linear output by means of a look-up table.

**Revendications**

1. Procédé de surveillance de l'habitacle d'un véhicule automobile au moyen du rayonnement IR, selon lequel au moins un émetteur IR stationnaire et au moins un récepteur IR stationnaire sont disposés à un emplacement central dans l'habitacle du véhicule, l'habitacle étant du moins temporairement exposé aux rayons, le rayonnement IR réfléchi étant reçu avec une caméra IR servant de récepteur IR, deux images étant enregistrées pour supprimer des influences parasites et les deux images étant soustraites l'une de l'autre au niveau de leurs valeurs de gris, **caractérisé en ce qu'**
il s'agit de deux images du même objet qui sont générées par un éclairage de l'au moins un capteur IR avec deux puissances de sortie de lumière de l'émetteur IR, et les intensités d'éclairage sont choisies de telle sorte que leur différence utilise la plage dynamique entière de la caméra en supprimant la lumière environnante.

2. Procédé selon la revendication 1,
**caractérisé en ce que**
l'émetteur IR est une diode électroluminescente qui est activée pendant le temps d'intégration du capteur IR et désactivée pendant la phase de lecture du capteur IR.

3. Procédé selon l'une quelconque des revendications 1 ou 2,
**caractérisé en ce que**
l'élément capteur optique de la caméra possède une ligne caractéristique linéaire, ou des caméras avec une ligne caractéristique non linéaire fournissent une sortie linéaire au moyen d'une table look-up.

**Fig. 1**

**Fig 2**

**Fig 3**